# EUROPÄISCHE PATENTSCHRIFT

(11) **EP 1 901 191 B1**
(45) Veröffentlichungstag und Bekanntmachung des Hinweises auf die Patenterteilung: **27.02.2013**
(21) Anmeldenummer: 06019504.7
(22) Anmeldetag: 18.09.2006
(51) Int. Cl.: G06F 21/00

(54) **Verfahren und Anordnung zur Verwaltung von Lizenzen**
Method and system for administration of licences
Procédé et dispositif destinés à la gestion de licences

(43) Veröffentlichungstag der Anmeldung: 19.03.2008
(73) Patentinhaber: Siemens Enterprise Communications GmbH & Co. KG, 81379 München (DE)
(72) Erfinder: Grimm, Olaf, 33106 Paderborn (DE); Hanna, Thomas, 32758 Detmold (DE); Karrengarn, Michael, 48165 Münster (DE)
(74) Vertreter: Fritzsche, Thomas

(56) Entgegenhaltungen:
- EP-A1- 1 505 528
- WO-A2-01/18710
- US-A- 5 204 897
- US-A- 5 752 041
- US-A- 6 056 786
- US-A1- 2006 085 350
- US-B1- 6 859 792

## Beschreibung

Die Erfindung betrifft ein computerimplementiertes Verfahren zur Verwaltung von Lizenzen gemäß dem Oberbegriff des Patentanspruchs 1 und eine Anordnung gemäß dem Patentanspruch 10 zur Durchführung des computerimplementierten Verfahrens.

Bei technischen Geräten und Anordnungen kommt es häufig vor, dass zur Nutzung einer Ressource eine Lizenz für die Nutzung vorhanden sein muss. So ist beispielsweise mit dem Erwerb eines Datenträgers mit einem Computerprogramm nicht automatisch die "Erlaubnis" verbunden, dieses Computerprogramm auch zu benutzen. Ein weiteres geläufiges Beispiel für die Nutzung von Lizenzen sind moderne Kommunikationssysteme, die herstellerseitig mit einer bestimmten Anzahl von Ressourcen, beispielsweise Schnittstellen, Kanäle, Dienste etc., ausgerüstet sind. Eine von einem Benutzer erworbene Anzahl an Lizenzen bestimmt dabei, in welchem Umfang die von Hersteller vorgeleisteten Ressourcen genutzt werden dürfen. Der Begriff "Ressource" ist dabei im Rahmen dieser Patentanmeldung sehr weit zu sehen und bezeichnet jegliche technische Einrichtung, Dienst, Funktion, Computerprogramm o. ä., deren Nutzung eine Nutzungserlaubnis, also eine Lizenz, erfordert.

Im Idealfall stellt ein Hersteller seinen Kunden genau so viele Ressourcen mit einer identischen Anzahl von Lizenzen zur Verfügung, wie es dem tatsächlichen Bedarf des Kunden entspricht. Im Beispiel der Kommunikationsanlagen würde das bedeuten, dass ein Kunde zum Betrieb von zwanzig Nebenstellen auch eine Kommunikationsanlage mit zwanzig Teilnehmerschnittstellen und selbstverständlich auch eine Lizenz zum Betrieb der zwanzig Teilnehmerschnittstellen (und somit zur Nutzung von 20 Kanälen) geliefert bekommt. Das hat aber in diesem Beispiel den Nachteil, dass mit steigendem Bedarf des Kunden sowohl einzelne Ressourcen (hier: physikalische Teilnehmerschnittstellen) als auch die zum Betrieb notwendigen Nutzungs-Lizenzen nachgerüstet werden müssen. Das ist sowohl logistisch als auch technisch unvorteilhaft. Daher werden oft technische Einrichtungen, so auch die hier betrachteten Kommunikationsanlagen, hinsichtlich ihrer Ressourcen "überdimensioniert", d.h., dass beispielsweise statt der ursprünglich benötigten zwanzig Ressourcen vierundzwanzig oder dreißig Ressourcen (Teilnehmeranschlüsse) geliefert werden, aber nur zwanzig Lizenzen. Für eine Erweiterung der Telekommunikationsanlage ist dann lediglich der Erwerb weiterer Lizenzen und die damit verbundene "Freischaltung" der bereits vorgeleisteten zusätzlichen Ressourcen erforderlich. Ein anderes Beispiel sind Computerprogramme, die in einer vollständigen Version auf einem Datenträger vertrieben werden bzw. sogar aus dem Internet geladen werden können, deren Einsatz aber den Erwerb eines so genannten "Freischaltcodes" ("installation key") und damit den Erwerb einer Lizenz erforderlich machen. Je nach Freischaltcode (Typ der Lizenz) wird dabei ein mehr oder weniger großer Funktionsumfang des Computerprogramms für den Kunden freigeschaltet. Das bedeutet, dass auch in diesem Beispiel die Ressourcen (hier: Funktionen des Computerprogramms) von vorneherein beim Kunden vorhanden (vorgeleistet) sind, deren Nutzung aber erst mit Erteilung einer Lizenz erfolgen kann. Kurz gesagt ist die Verwendung von Lizenzen ein Instrument, um Leistungen, also Ressourcen, bedarfsweise freizugeben oder zu sperren.

Als Beispiel für ein lizenzbasiertes Nutzungsszenario sei nun ein Kommunikationsnetz mit drei Kommunikationsknoten angenommen, wobei in jedem Kommunikationsknoten zur Nutzung eines jedes Kanals (also z. B. für jedes Telefongespräch) eine Lizenz vorhanden sein muss. Für den Fall, dass an jeder der drei Kommunikationsanlagen dreißig Endgeräte angeschlossen sind, können beispielsweise für jede Kommunikationsanlage dreißig Lizenzen vergeben werden. Dies hätte den Vorteil, dass immer und in jeder Kommunikationsanlagen genügend Lizenzen für die Ressourcen (hier: Kanäle) zur Verfügung stehen, selbst dann, wenn alle Teilnehmer zur gleichen Zeit telefonieren, nieren, sprich: ihre Ressourcen nutzen. Eine solche Konstellation hätte jedoch für den Betreiber des Kommunikationsnetzes den Nachteil, dass er neunzig Lizenzen erwerben müsste, obwohl es höchst unwahrscheinlich ist, dass tatsächlich alle neunzig Teilnehmer gleichzeitig telefonieren und somit höchstwahrscheinlich der Erwerb einer solch hohen Lizenzzahl überhaupt nicht nötig ist. Zur Lösung des Problems kann natürlich die Lizenzzahl für jede Kommunikationsanlage verringert werden, beispielsweise halbiert. Dann kann es aber vorkommen, dass beispielsweise in einem ersten der Kommunikationssysteme die Anzahl der erteilten Lizenzen nicht ausreicht, während in einem anderen der Kommunikationssysteme freie, nicht genutzte Lizenzen vorliegen. Dies hätte zur Folge, dass wegen "Lizenzmangels" an einem ersten Ort eine Funktion nicht möglich ist, obwohl insgesamt genügend Lizenzen verfügbar sind.

Zur Lösung dieses "Verteilungsproblems" ist es bekannt, Lizenzen flexibel immer genau da einzusetzen, wo diese gerade benötigt werden; man spricht auch von einem "Floating licences"-Konzept oder auch von einer "zentralen Lizensierung". Diese wird in der Regel realisiert, indem eine zentrale Instanz, ein so genannter "licensing server", eingesetzt wird, auf dem alle für das Netzwerk oder die Anordnung verfügbaren (freigebbaren) Lizenzen bevorratet werden. Sobald eine Ressource verwendet werden soll (im obigen Beispiel hieße dies: sobald ein Kanal benutzt werden soll), stellt diese Ressource bzw. die technische Einrichtung, die diese Ressource zur Verfügung stellt (hier: Kommunikationsanlage), eine Verbindung zu dem Lizenz-Server her und bezieht von diesem für die Dauer der Nutzung eine freie Lizenz. Sobald die Ressource nicht mehr verwendet wird, wird diese Lizenz durch einen erneuten Datenaustausch mit dem Lizenz-Server wieder freigegeben, so dass diese Lizenz den anderen Ressourcen wieder zur Verfügung steht. Dieses Vorgehen hat den Vorteil, dass nicht in jeder Kommunikationsanlage des Netzwerks aus Sicherheitsgründen, also für den Fall einer außergewöhnlich hohen Auslastung, eine Maximalzahl an Lizenzen vorgehalten werden muss, sondern die verfügbaren Lizenzen flexibel für verschiedene Ressourcen bzw. an verschiedenen Orten eingesetzt werden können. Der Nachteil des geschilderten Verfahrens liegt allerdings darin, dass die Netzlast in einem Netzwerk durch das ständige Allokieren und Wieder-Freigeben von Lizenzen steigt. Außerdem kann bei einer Störung oder Nicht-Erreichbarkeit des zentralen Lizenz-Servers die Funktionalität des gesamten Netzwerkes stark eingeschränkt werden.

Aus der Druckschrift WO 01/18710 A2 - Redding et al "License Management System and Method with Multiple License Servers" ist eine Anordnung bekannt, bei der eine Lizenzverwaltung durch ein verteiltes System gemäß einem Verfahren nach dem Oberbegriff des Anspruchs 1 durchgeführt wird. Dabei sind untergeordnete Lizenzausgabe-Instanzen (Clients) und übergeordnete Lizenzausgabe-Instanzen (Server) vorgesehen, wobei in den Fällen, in denen seitens eines der Clients Lizenzen fehlen, diese mittels eines Servers von einem weiteren der Clients abgerufen (entliehen) werden können.

Auch die Druckschrift US 6,859,792 B1 - Marjadi et al "Product suite licensing method" zeigt ein Verfahren zur Verwaltung von Lizenzen für Softwareprodukte. Dabei ist vorgesehen, Anwendern Lizenzen für Software-Pakete zu erteilen, wobei ein solches Software-Paket aus einer Vielzahl von Einzelanwendungen besteht. Dabei ist jeder der Einzel-Anwendungen eine Punktzahl an erforderlichen Lizenz-Punkten zugeordnet, wobei für jede benutzte Anwendung die entsprechende Anzahl von Punkten von einem Punkte-Konto des Anwender abgezogen wird bzw. bei Nutzungsende wieder hinzugebucht wird. Die Inbetriebnahme einer Anwendung ist dabei nur dann möglich, wenn das Punkte-Konto des Anwenders ein ausreichendes Punkte-Guthaben aufweist.

Es ist also eine Aufgabe der vorliegenden Erfindung, die Zuordnung von Lizenzen zu Ressourcen flexibler zu gestalten und sogar bei einer Störung oder Nicht-Erreichbarkeit des zentralen Lizenz-Servers die Betriebssicherheit von Anordnungen mit zentraler Lizenzierung zu verbessern.

Die Aufgabe wird durch ein computerimplementiertes Verfahren gemäß dem Patentanspruch 1 und durch eine Anordnung gemäß dem Patentanspruch 10 gelöst.

Die Lösung der Aufgabe sieht ein Verfahren zur Verwaltung von Lizenzen vor, wobei für die Nutzung einer Ressource dieser Ressource eine Lizenz zugeordnet wird, und wobei diese Lizenz nach Nutzung der Ressource wieder freigegeben wird. Dabei wird in einer ersten zentralen Instanz die Anzahl der freigebbaren Lizenzen registriert, der zu nutzenden Ressource wird durch eine zweite Instanz eine in dieser registrierte freigebbare Lizenz zur Nutzung zugeordnet und/oder eine von einer dieser zweiten Instanz der Ressource zugeordnete Lizenz wird bei Nicht-Nutzung in der zweiten Instanz wieder als freigebbar registriert. In einem Synchronisierungs-Schritt wird wiederholt die Differenz aus der Anzahl der seit einem vorangegangenen Synchronisierungs-Schritt zur Nutzung vergebenen und den in dieser Zeit wieder freigegebenen Lizenzen von der zweiten Instanz zu der ersten Instanz gemeldet, wobei gemäß dieser Differenz die Anzahl der in der ersten Instanz registrierten freigebbaren Lizenzen verringert wird, und umgekehrt die resultierende Anzahl der freigebbaren Lizenzen von der ersten Instanz zu der zweiten Instanz gemeldet und dort als Anzahl der freigebbaren Lizenzen registriert wird. Durch dieses Verfahren ist sichergestellt, dass in der zweiten Instanz nach Abschluss des Synchronisierungs-Schrittes die in einer Anordnung aktuell verfügbaren freigebbaren Lizenzen zur Verfügung stehen, wobei mehrere zweite Instanzen vorgesehen werden und der Synchronisierungs-Schritt wiederholt nacheinander mit jeder der zweiten Instanzen durchgeführt wird. Dadurch stehen somit nach Abschluss jedes Synchronisierungs-Schrittes bei der Mehrzahl zweiter Instanzen bei jeder dieser zweiten Instanzen die freigebbaren Lizenzen in vollem Umfang zur Verfügung. Dadurch kann auch in den Fällen bei jeder zweiten Instanz auf alle freigebbaren Lizenzen zugegriffen werden, in denen die Verbindung zu der ersten Instanz (zentrale Instanz) nicht oder nur eingeschränkt möglich ist, wobei die Synchronisierungs-Schritte in einem vorgegebenen Zeitraster wiederholt ausgeführt werden.

Die Lösung der Aufgabe sieht weiterhin eine Anordnung zur Durchführung des vorstehend beschriebenen computerimplementierten Verfahrens vor, die eine erste Instanz sowie mehrere zweite Instanzen aufweist.

Die erfindungsgemäße Anordnung weist insbesondere eine Mehrzahl Ressourcen auf, wobei für die Nutzung einer Ressource dieser jeweils für die Dauer ihrer Nutzung eine Lizenz zugeordnet ist. Dabei sind Mittel vorgesehen, um einer zu nutzenden Ressource aus einem Vorrat freigebbarer Lizenzen eine dieser Lizenzen zuzuordnen und nach der Nutzung der Ressource die nicht mehr benötigte Lizenz dem Vorrat wieder zuzuordnen. Die Anordnung ist mit einer ersten Instanz versehen, mit einer ersten Datenbank zur Registrierung der freigebbaren Lizenzen. Weiter ist die Anordnung mit einer Mehrzahl zweiter Instanzen versehen, mit zweiten Datenbanken für die Verwaltung der freigebbaren Lizenzen, wobei die zweiten Instanzen zur Durchführung eines Synchronisierungs-Schrittes mit der ersten Instanz eingerichtet sind und wobei die zweiten Instanzen zur Vergabe von Lizenzen an die Ressourcen und zur Wieder-Freigabe von nicht mehr genutzten Lizenzen eingerichtet sind. Die erste Instanz und die zweiten Instanzen sind dabei derart eingestellt, dass bei der Durchführung eines Synchronisierungs-Schrittes zwischen der ersten Instanz und einer der zweiten Instanzen jeweils in einem ersten Teilschritt durch die zweite Instanz zu der ersten Instanz zumindest die Differenz aus der Anzahl der seit der letzten Synchronisierung vergebenen Lizenzen und der Anzahl der seit der letzten Synchronisierung wieder freigegebenen Lizenzen gemeldet wird. Die Instanzen sind weiter so eingerichtet, dass in einem zweiten Teilschritt der Synchronisierung durch die zentrale Instanz die Anzahl der dort registrierten freigebbaren Lizenzen um die gemeldete Differenz verringert bzw. erhöht wird, und in einem dritten Teilschritt durch die zentrale Instanz zu der zweiten Instanz die derart neu ermittelte Anzahl freigebbarer Lizenzen übermittelt wird, wobei die zweite Instanz derart eingestellt ist, dass diese neu ermittelte Anzahl freigebbarer Lizenzen in der zweiten Instanz an die Stelle der dort bisher registrierten Anzahl der freigebbaren Lizenzen tritt. Mit einer solchen Anordnung ist vorteilhaft sichergestellt, dass die Reaktionszeit zwischen dem Beantragen einer Lizenz und der Zuteilung einer Lizenz zu einer Ressource verringert wird, weil nicht für jede Lizenz-Vergabe eine Verbindung zu einem zentralen Lizenz-Server, also mit der ersten Instanz, aufgebaut werden muss. Außerdem sind in einer solchen Anordnung die freigebbaren Lizenzen bei allen zweiten Instanzen gleichzeitig verfügbar, wobei durch die Mittel für den Synchronisierungs-Schritt das Ziel erreicht wird, dass die Datenbanken der zweiten Instanzen mit der ersten Instanz jeweils abgeglichen werden. In einer solchen Anordnung ist es darüber hinaus möglich, im Fall von "Last-Spitzen" eine große Anzahl von Ressourcen auch dann mit Lizenzen zu versehen, wenn nur noch wenige freigebbare Lizenzen in der Gesamtanordnung frei sind. Dadurch wird das Erfordernis vermieden, in der Gesamt-Anordnung eine unnötig hohe Zahl freigebbarer Lizenzen aus Sicherheitsgründen vorzuhalten.

Vorteilhafte Ausgestaltungen des erfindungsgemäßen Verfahrens sind in den abhängigen Patentansprüchen angegeben. Die dabei gezeigten Merkmale und Vorteile sind sinngemäß auch auf die erfindungsgemäße Anordnung anzuwenden.

Da der Synchronisierungs-Schritt wiederholt nacheinander mit jeder der zweiten Instanzen durchgeführt wird, ist im statistischen Mittel sichergestellt, dass die in den zweiten Instanzen jeweils registrierten freigebbaren Lizenzen der Anzahl der in der ersten Instanz registrierten freigebbaren Lizenzen entspricht. Sofern zwischenzeitlich keine freigebbaren Lizenzen den Ressourcen zugeordnet bzw. von den Ressourcen Lizenzen zurückgegeben werden, entspricht nach einem zweifachen Synchronisierungs-Zyklus der in jeder zweiten Instanz gespeicherte Wert für die freigebbaren Lizenzen sogar genau dem entsprechenden Wert in der ersten Instanz. Somit ist sichergestellt, dass für eine Gesamt-Anordnung im Wesentlichen nur die im statistischen Mittel benötigte Anzahl von Lizenzen vorgehalten werden muss.

Wenn durch die zu nutzende Ressource vor ihrer Nutzung oder zum Beginn ihrer Nutzung die Zuteilung einer Lizenz durch eine zweite Instanz, der diese Ressource zugeordnet ist, veranlasst wird, und wenn dabei durch die zweite Instanz in den Fällen, in denen zumindest eine freigebbare Lizenz in der zweiten Instanz registriert ist, der Ressource diese Lizenz zugeteilt wird und diese Lizenz für weitere Ressourcen so lange gesperrt wird, bis diese Lizenz durch die sie nutzende Ressource wieder freigegeben wird, ist sichergestellt, dass durch eine zweite Instanz jede freigebbare Lizenz zur gleichen Zeit nur einer einzigen der Ressourcen zugeordnet wird, wodurch die Mehrfach-Vergabe einer freigebbaren Lizenz innerhalb ein- und derselben zweiten Instanz vermieden wird.

Es ist vorteilhaft, wenn verschiedene Typen von Ressourcen definiert werden, wobei dann für die verschiedenen Ressourcen-Typen verschiedene Lizenz-Typen definiert werden und wobei diese Lizenzen verschiedenen Typs durch die erste Instanz und durch die zweiten Instanzen jeweils getrennt voneinander verwaltet werden. Dadurch können unterschiedliche Ressourcen mit unterschiedlichen Lizenzen durch dieselben ersten und zweiten Instanzen miteinander verknüpft werden.

Es ist von Vorteil, dass erfindungsgemäß der Synchronisierungs-Schritt in einem vorgegebenen Zeitraster wiederholt ausgeführt wird. Durch das vorgegebene Zeitraster kann damit direkt die Netzbelastung eines Netzwerkes beeinflusst werden, wobei kürzere Synchronisierungs-Schritte den Zeitraum verkürzen, in dem über die tatsächliche Anzahl freigebbarer Lizenzen hinaus Lizenzen freigegeben werden können, aber auch zu einer höheren Netzbelastung durch die Synchronisierungs-Daten führt. Dabei ist es von Vorteil, wenn in den Fällen, in denen die Anzahl registrierter freigebbarer Lizenzen in der ersten Instanz und/oder in zumindest einer der zweiten Instanzen einen vordefinierten Schwellwert unterschreitet, der Synchronisierungs-Schritt häufiger als in dem Zeitraster vorgegeben durchgeführt wird. Dadurch ist sichergestellt, dass wieder freigegebene Lizenzen in möglichst kurzer Zeit nicht nur derjenigen zweiten Instanz, der diese Lizenz zurückgegeben wurde, sondern auch zeitnah der ersten Instanz zurückgemeldet wird und somit den nachfolgend synchronisierten zweiten Instanzen wieder gemeldet wird.

Eine gleichmäßige Auslastung der zweiten Instanzen kann erreicht werden, indem jede Ressource genau einer der zweiten Instanzen zugeordnet wird. Dabei können vorteilhaft zusätzliche Ersatz-Zuordnungen vorgenommen werden, die für den Fall gelten, dass eine oder mehrere der zweiten Instanzen ausfallen.

Die erste Instanz und/oder die zweiten Instanzen können derart voreingestellt werden, dass für einen vordefinierten Zeitraum die Anzahl der in Nutzung befindlichen Lizenzen die Anzahl der registrierten freigebbaren Lizenzen übersteigen kann. Dadurch wird eine solche Anordnung "überlast-tolerant", wodurch Betriebsstörungen in Folge nicht-nutzbarer Ressourcen bei Lastspitzen vermieden werden. Wenn dieser vordefinierte Zeitraum der Zeitraum bis zum Abschluss des nächsten Synchronisierungs-Schrittes ist, kann durch Eingabe einer einzigen Zeitkonstante, nämlich des Synchronisierungs-Abstandes, das Überlast-Verhalten einer erfindungsgemäßen Anordnung gut gesteuert werden. Strategien der sog. "Fuzzy-Logic" können dabei vorteilhaft zur Steuerung des Lizenzvolumens eingesetzt werden.

Ausführungsbeispiele des erfindungsgemäßen Verfahrens werden nachfolgend anhand der Zeichnungen erläutert. Sie dienen gleichzeitig der Erläuterung eines Ausführungsbeispiels der erfindungsgemäßen Anordnung.

Dabei zeigen:
- Figur 1: eine Anordnung aus mehreren Datenbank-Knoten, mehreren Applikations-Knoten und mehreren Client-Systemen mit Ressourcen,
- Figur 2: die Verteilung freigebbarer und allokierter Lizenzen während verschiedener Lastzustände,
- Figur 3: in schematischer Darstellung einen Datentransfer während eines Synchronisationsschrittes,
- Figur 4: das Hinzufügen freigebbarer Lizenzen zu der Anordnung,
- Figur 5: die Situation bei einer Unter-Versorgung mit freigebbaren Lizenzen,
- Figur 6: einen Sonderfall mit nur einem Applikations-Knoten, und
- Figur 7: ein Szenario mit dem Ausfall eines Applikations-Knotens.

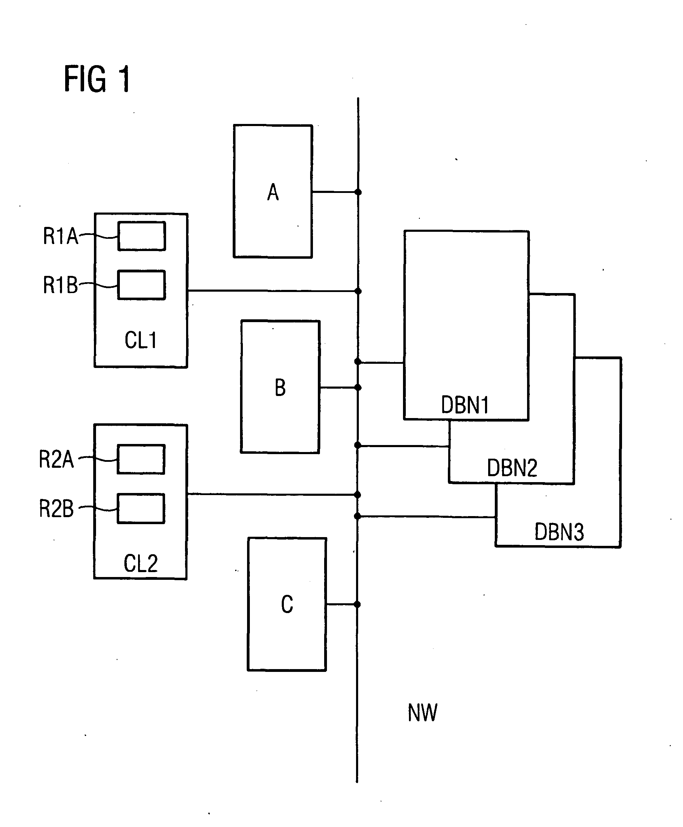

In der Figur 1 ist schematisch eine Anordnung aus einem Netzwerk NW (Kommunikationsnetzwerk, Datennetzwerk, Intranet, Internet, o.ä.) mit Datenbank-Knoten DBN1, DBN2, DBN3, mit Applikations-Knoten A, B, C, mit Client-Systemen CL1, CL2 und mit Ressourcen R1A, R1B, R2A, R2B dargestellt. Die hierbei schematisch dargestellten Komponenten stellen eine sog. "verteilte Anordnung" ("Distributed System") dar, wobei die einzelnen Komponenten in dem Netzwerk NW frei "beweglich", also an beliebiger Stelle, angeordnet sein können. Das gilt insbesondere für die Datenbank-Knoten DBN1, DBN2, DBN3, die logisch eine einzige Datenbank bilden, aber aus Gründen der Lastverteilung und aus Gründen der Redundanz (Ausfallsicherheit) physikalisch auf verschiedene Hardware-Einheiten verteilt sind. Gleichfalls sind in der Figur 1 zwar die Ressourcen R1A, R1B als zu dem Client-System CL1 zugehörend dargestellt - entsprechend die Ressourcen R2A, R2B zum Client-System CL2 - ; die hier betrachteten Ressourcen können jedoch ebenso auf verschiedenen und auch völlig anderen Hardware-Plattformen angeordnet sein.

Die Ressourcen R1A, R1B, R2A, R2B sind Funktionen ("Dienste"), die im Rahmen des verteilten Systems, welches auch als SOA ("Service Orientated Architecture") bekannt ist, in Clients oder von Clients genutzt werden können. Im vorliegenden Ausführungsbeispiel sind dies Kommunikationskanäle, die in einer Telephonie-Anordnung belegt werden können; selbstverständlich kann auch jeder andere Dienst eine beliebige Funktionalität oder ein Gerät als "Ressource" betrachtet werden. Ein Teilnehmer muss für jedes Telefongespräch, welches er führen möchte, einen solchen Kanal zur Übertragung seines Gesprächs nutzen. Für die Nutzung eines solchen Kommunikations-Kanals wird ein sog. Protokoll-Stack (z.B. ein sog. "SIP-Stack" für das Session-Initiation-Protocol) genutzt. Ein solcher Protokoll-Stack darf jedoch nur verwendet werden, wenn der Lizenzinhaber dieses Protokoll-Stacks eine Erlaubnis dazu erteilt, sprich: eine Nutzungslizenz erteilt. Im vorliegenden Ausführungsbeispiel wird zunächst davon ausgegangen, dass der Betreiber der dargestellten Anordnung eine Lizenz zum gleichzeitigen Betrieb von 20 Ressourcen R1A, R1B, R2a, R2B erworben hat. Die Ressourcen R1A, R1B, R2A, R2B sind dabei in der Figur 1 stellvertretend für eine sehr viel größere Anzahl gleichartiger Ressourcen (hier: Protokoll-Stacks) dargestellt.

Für die Diskussion des erfindungsgemäßen Verfahrens bzw. der erfindungsgemäßen Anordnung ist es unwichtig, in oder von welchem der Client-Systeme CL1, CL2 eine der Ressourcen R1A, R1B, R2A, R2B genutzt werden soll. Aus diesem Grund sind in den nachfolgenden Figuren die Ressourcen R1A, R1B, R2A, R2B nicht weiter dargestellt. Im Folgenden wird daher der Begriff "Ressource" immer allgemein verwendet.

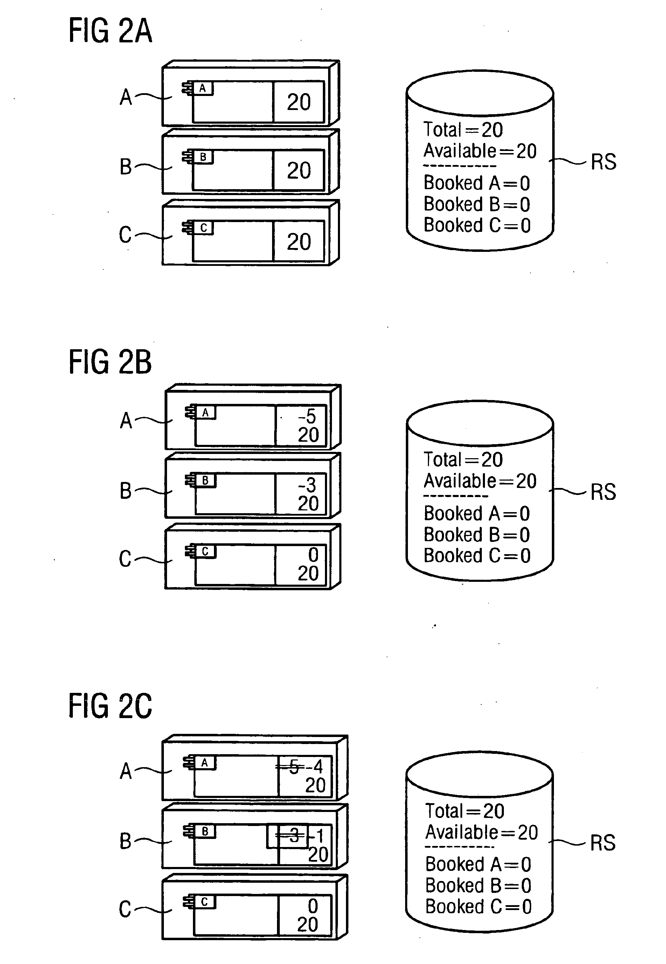

Zur Nutzung einer Ressource bedarf es - wie bereits erläutert - jeweils einer Lizenz, wobei eine Lizenz zur gleichen Zeit immer nur einer bestimmten Anzahl (hier: genau einer) nutzenden Ressource zugewiesen sein kann. D.h., dass vor der Nutzung bzw. zu Beginn einer Nutzung einer Ressource dieser Ressource aus einem Vorrat der verfügbaren ("freigebbaren") Lizenzen heraus eine dieser Lizenzen zugeordnet werden muss, die nach Abschluss der Nutzung der Ressource dem "Lizenz-Pool" wieder zur Verfügung gestellt werden sollte. Dabei ist jede Ressource einem der Applikations-Knoten A, B, C zugeordnet. Jede Ressource, die benutzt werden soll, bezieht von dem zugeordneten der Applikations-Knoten A, B, C für die Dauer der Nutzung die dazu notwendige Lizenz. Dabei kann entweder die Ressource die Lizenz selbsttätig bei dem Applikations-Knoten A, B, C beantragen, oder aber der Vorgang der Lizenz-Zuteilung kann von einer (nicht dargestellten) externen Instanz vorgenommen werden. Die Verwaltung der Lizenzen innerhalb der Applikations-Knoten A, B, C wird dort jeweils durch ein spezielles Computerprogramm vorgenommen, den sog. "Ressource-Broker". Das zentrale Instrument zur Verwaltung der Lizenzen, die sog. erste Instanz, soll im Folgenden als "Ressource-Store" RS bezeichnet werden; diese erste, zentrale Instanz "Ressource-Store" RS kann - wie bereits beschrieben - durch eine Vielzahl von Datenbank-Knoten DBN1, DBN2, DBN3 gebildet werden. Der Ressource-Store RS ist derjenige zentrale Punkt, an dem der gesamten Kommunikations-Anordnung Lizenzen für die Nutzung der Ressourcen hinzugefügt bzw. aus dieser entfernt ("gelöscht") werden können. In den Figuren 2A bis 7 sind schematisch nur noch die Applikations-Knoten A, B, C mit der dort "zwischengespeicherten" Anzahl von freigebbaren und allokierten Lizenzen sowie (jeweils rechts in der Figur) der Ressource-Store RS mit den dort registrierten Lizenzen dargestellt.

In einer alternativen Ausführungsform sind die Ressourcen nicht auf den Client-Systemen CL1, CL2 lokalisiert, sondern auf anderen Knoten, beispielsweise direkt auf den Applikations-Knoten A, B, C. Selbstverständlich sind in diesen Fällen für den Bezug bzw. die Freigabe einer Lizenz keine Zugriffe auf das Netzwerk NW notwendig, sofern die entsprechende Ressource auf demselben Applikations-Knoten A, B, C installiert ist, auf dem der dieser Ressource zugeordnete Ressource-Broker angeordnet ist.

Im Folgenden wird vorausgesetzt, dass in den Ressource-Store RS 20 freigebbare Lizenzen eingestellt worden sind. Der Einfachheit halber wird dabei vorausgesetzt, dass alle betrachteten Ressourcen Lizenzen desselben Typs benötigen; anderenfalls wäre jeder Ressourcen-Typ bzw. jeder zugeordnete unterschiedliche Lizenzen-Typ separat zu betrachten. Im rechten Teil der Figur 2A ist dazu schematisch der Ressource-Store RS dargestellt, wobei die Angabe "Total = 20" besagt, dass in Summe 20 Lizenzen verwaltet werden. Die Angabe "Available = 20" besagt weiterhin, dass von den verwalteten 20 Lizenzen 20 Stück freigebbar sind, also zunächst keine Lizenz in Nutzung befindlich ist.

Die Ressource-Broker der Applikations-Knoten A, B, C sind im linken Teil der Figur 2A dargestellt. Diese führen in festgelegten, konfigurierbaren Zeitabständen jeweils einen Synchronisierungs-Schritt mit dem Ressource-Store RS durch. Ferner wird ein solcher Synchronisierungs-Schritt auch beim Neu-Einschalten jedes Ressource-Brokers durchgeführt, wobei die Ressource-Broker jeweils eine Verbindung zu dem Ressource-Store RS aufbauen. In diesem Synchronisierungs-Schritt liest jeder Ressource-Broker die Anzahl der freigebbaren Lizenzen (hier zunächst: "Available = 20") aus dem Ressource-Store RS aus und speichert diese Angabe. Diese Angaben "20" sind im linken Teil der Figur 2A jeweils dargestellt.

Im Folgenden wird eine Zeitperiode betrachtet, in der kein weiterer Synchronisierungs-Schritt stattfindet. In dieser Zeitperiode fordern verschiedene Ressourcen Lizenzen bei den ihnen jeweils zugeordneten Ressource-Brokern an. Selbstverständlich kann eine Ressource bei Ausfall eines Ressource-Brokers bzw. bei einer Nicht-Erreichbarkeit des entsprechenden Applikations-Knotens A, B, C auf einen anderen der Ressource-Broker eines anderen der Applikations-Knoten A, B, C ausweichen. Beim Ressource-Broker des Applikations-Knotens A werden fünf Lizenzen gebucht, beim Applikations-Knoten B drei Lizenzen und beim Applikations-Knoten C wird zunächst keine Lizenz beantragt. Der daraus resultierende Zustand ist in der Figur 2B dargestellt. In der Darstellung ist auf der rechten Seite des jeweiligen Ressourcen-Brokers in der oberen Spalte die Anzahl der seit dem letzten Synchronisierungs-Schritt allokierten Lizenzen eingetragen; in der Spalte darunter ist weiterhin, wie aus der Beschreibung zu Figur 2A bekannt, die Anzahl der freigebbaren Lizenzen verzeichnet. Diese Anzahl wird durch das bloße Allokieren von Lizenzen zunächst nicht geändert.

Aus der Differenz zwischen der Anzahl der allokierten Lizenzen und der Anzahl der freigebbaren Lizenzen ergibt sich dabei diejenige Anzahl an Lizenzen, die durch den jeweiligen Ressource-Broker noch vergeben werden könnte; im Fall des Applikations-Knotens A fünfzehn Lizenzen, beim Applikations-Knoten B siebzehn Lizenzen und beim Applikations-Knoten C die ursprünglichen zwanzig Lizenzen.

Die in der Figur 2C dargestellte Situation ergibt sich, wenn dem Ressource-Broker des Applikations-Knotens A eine Lizenz und demjenigen des Applikations-Knotens B zwei Lizenzen wieder zurückgegeben ("freigegeben") werden. Dem entsprechend verringert sich die jeweils gespeicherte Anzahl der allokierten Lizenzen.

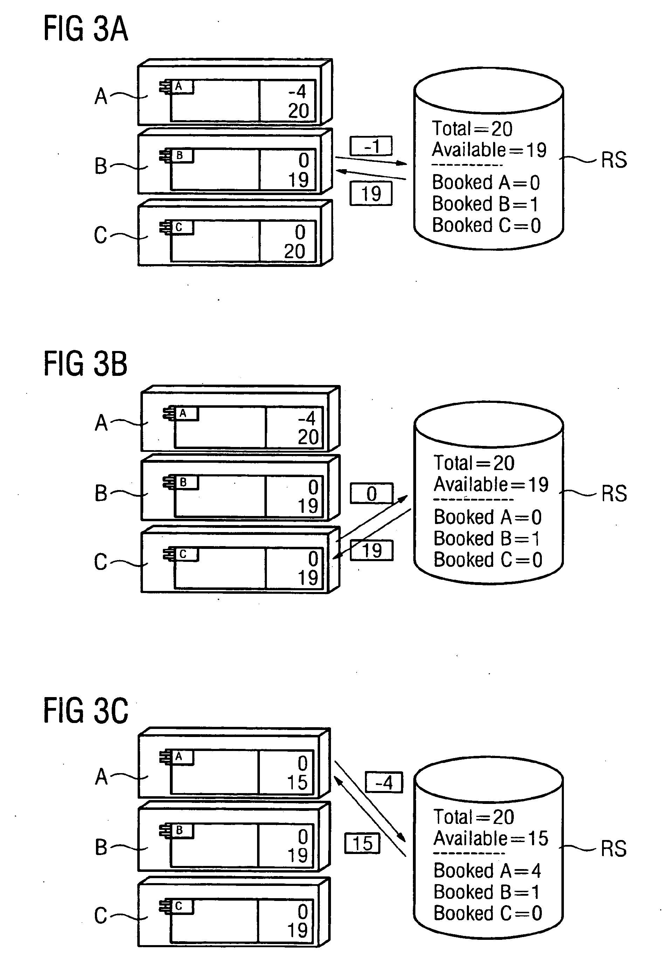

Nachfolgend werden die Änderungen beschrieben, die sich in Folge eines Synchronisierungs-Zyklus' ergeben. Dabei wird zunächst der Ressource-Broker des Applikations-Knotens B synchronisiert. Dabei ist es im vorliegenden Ausführungsbeispiel dem Zufall überlassen, welcher der Ressource-Broker sich zuerst synchronisiert, weil es im vorliegenden Fall davon abhängt, welcher der Applikations-Knoten zuerst eingeschaltet wurde. Für die Reihenfolge und für die Häufigkeit der Synchronisierungs-Schritte sind jedoch die unterschiedlichsten Szenarien und Vorgehensweisen denkbar. Der Synchronisierungs-Schritt des Ressource-Brokers des Applikations-Knotens B ist in der Figur 3A schematisch dargestellt. In einem ersten Teilschritt übermittelt der entsprechende Ressource-Broker den Saldo der von ihm seit dem letzten Synchronisierungs-Schritt vergebenen Lizenzen zu dem Ressource-Store RS. Da es sich im vorliegenden Fall um den ersten Synchronisierungs-Schritt handelt, ist dies gleich dem Saldo seit dem Einschalten bzw. Neustart des Ressource-Brokers des Applikations-Knotens B. Da von diesem Applikations-Knoten B zunächst drei Lizenzen vergeben wurden und danach zwei Ressourcen wieder außer Betrieb gesetzt wurden und damit zwei Lizenzen zurückgegeben (freigegeben) wurden, beträgt dieser Saldo "-1". Damit verringert sich im Ressource-Store RS die Anzahl der verfügbaren, freigebbaren Lizenzen um 1 zu "19"; dieser Wert wird im zweiten Teilschritt des Synchronisierungs-Schrittes zu dem Ressource-Broker des Applikations-Knotens B übermittelt und dort anstelle der "20" als neuer Wert für die Anzahl der freigebbaren Lizenzen eingetragen. Gleichzeitig wird als neuer "Saldo" für die Anzahl der freigegebenen Lizenzen in diesem Ressource-Broker zu Null zurückgesetzt, weil der Ressource-Broker nun vollständig synchronisiert ist.

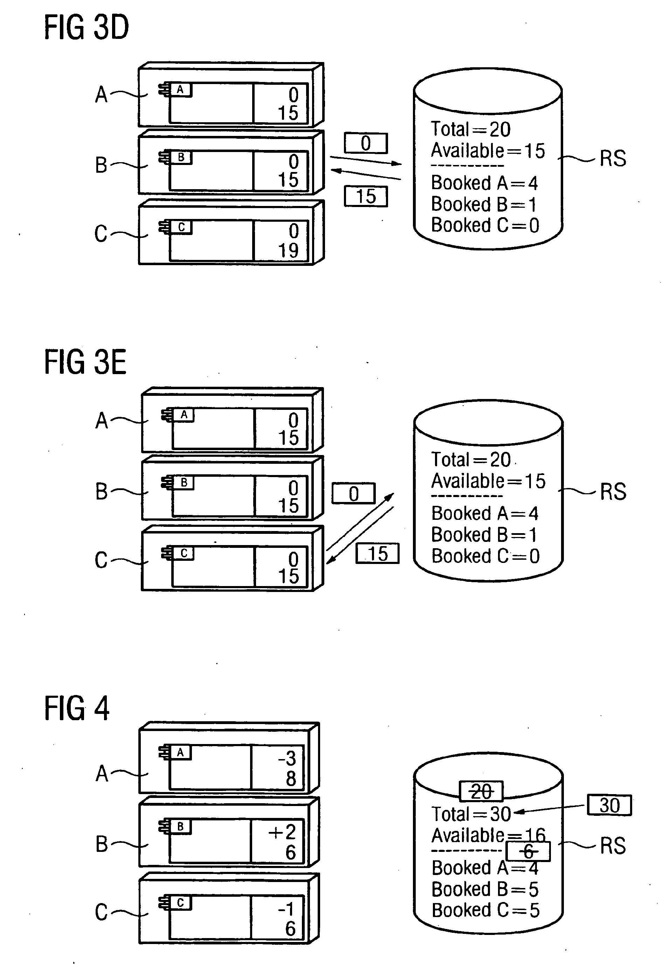

In der Figur 3B ist dargestellt, wie der nächste Ressource-Broker des Applikations-Knotens C synchronisiert wird. Als Resultat ergibt sich dort ebenfalls ein neuer Wert "19" für die Anzahl der freigebbaren Lizenzen. Schließlich wird auch der Ressource-Broker des Applikations-Knotens A synchronisiert; dieser Vorgang ist in der Figur 3C schematisch dargestellt. In den Figuren 3A, 3B und 3C ist dabei zu sehen, dass im Ressource-Store RS die von den einzelnen Ressource-Brokern jeweils vergebene ("gebuchte") Anzahl Lizenzen vermerkt ist. Daraus folgt, dass neben der Gesamtanzahl an Lizenzen ("Total = 20") nicht zwingend die Anzahl der freigebbaren Lizenzen ("Available = 15") in Figur 3C gespeichert werden muss; dieser Wert kann anhand der Gesamtanzahl und anhand der Einzelwerte ("Booked A = 4; B = 1; C = 0") auch jederzeit neu errechnet werden. In der Figur 3C ist zu sehen, dass aufgrund der vier Lizenzen, die durch den Ressource-Broker des Applikations-Knotens A vergeben worden sind, sowohl die Anzahl der freigebbaren Lizenzen im Ressource-Store RS als auch der korrespondierende Wert im Ressource-Broker des Applikations-Knotens A neu auf "fünfzehn" festgelegt wird. Dieser Wert verbleibt bei den anderen Ressource-Brokern zunächst bei dem Wert "19", weil dort noch kein erneuter Synchronisierungs-Schritt durchgeführt worden ist. D.h. also, dass bei diesen beiden verbleibenden Ressource-Brokern weiterhin neunzehn Lizenzen verfügbar sind, obwohl von der Gesamtzahl "20" de facto nur noch fünfzehn Lizenzen übrig sind. Dieser Zustand bleibt so lange bestehen, bis die in den Figuren 3D und 3E dargestellten Synchronisierungs-Schritte durchgeführt worden sind. In der Zwischenzeit ist die Möglichkeit gegeben, dass mehr als die "erlaubten" zwanzig Lizenzen vergeben werden. Sofern in der Zwischenzeit keine Ressourcen belegt oder freigegeben werden, und somit die mit diesen Ressourcen verknüpften Lizenzen allokiert oder freigeben werden, dauert es also maximal zwei komplette Synchronisierungs-Zyklen lang, bis alle Ressource-Broker vollständig mit dem Ressource-Store RS synchronisiert sind. In der Zwischenzeit können mehr Ressourcen verwendet werden, als das durch die Gesamtzahl der freigebbaren Lizenzen vorgesehen ist, ohne dass einer Ressource eine Lizenz verweigert wird.

In der Figur 4 ist ein Szenario dargestellt, bei dem zunächst zwanzig Lizenzen insgesamt im Ressource-Store RS eingespeichert sind, von denen noch sechs verfügbar ("Available = 6") sind. Für den Fall, dass der Betreiber der Anordnung zehn weitere Lizenzen erwirbt, werden diese zehn Lizenzen nur an einer einzigen Stelle neu registriert, nämlich im Ressource-Store RS. Dadurch erhöht sich die Anzahl der Lizenzen auf dreißig ("Total = 30"), wonach die Anzahl der freigebbaren Lizenzen neu berechnet wird ("Available = 16"). Diese Anzahl wird bei jedem nachfolgenden Synchronisierungs-Schritt in den jeweils synchronisierten Ressource-Broker übernommen. Entsprechend wird vorgegangen, wenn dem Netzwerk bzw. der Anordnung Lizenzen entzogen werden. Es ist zu beachten, dass durch die beschriebene Vorgehensweise durch wiederholte Synchronisierungs-Zyklen im statistischen Mittel alle Ressource-Broker über die identische Anzahl freigebbarer Lizenzen verfügen, unabhängig davon, wie viele Lizenzen von dem jeweiligen Ressource-Broker bereits vergeben bzw. wieder eingezogen wurden. Alternativ können in dem Ressource-Store RS auch Anweisungen eingefügt werden, die eine ungleichmäßige Verteilung der freigebbaren Lizenzen bewirken, beispielsweise abhängig von Berechtigungen, die den verschiedenen Applikations-Knoten bzw. deren Nutzern zugeordnet sind.

Das beschriebene Verfahren hat bekanntlich den Vorteil, dass in jedem Applikations-Knoten A, B, C bzw. bei jedem Ressource-Broker jeweils eine hohe Anzahl, im Idealfall sogar jeweils die tatsächliche Anzahl der freigebbaren Lizenzen zur Verfügung steht, ohne dass für die Vergabe von Lizenzen jeweils eine Verbindung zum Ressource-Store RS aufgebaut werden muss. Die Vergabe von Lizenzen und die Freigabe von Lizenzen kann dementsprechend schnell und auch sicher erfolgen. Darüber hinaus ist sichergestellt, dass in den Fällen, in denen überhaupt freigebbare Lizenzen in der Gesamtanordnung vorhanden sind, im Rahmen dieser Anzahl überall Lizenzen frei vergeben werden können und somit auch Spitzenlasten "abgefedert" werden können, die über die Gesamtzahl an Lizenzen hinaus gehen können. Dies bedeutet zum einen, dass die im System vorzuhaltende Anzahl an Lizenzen nicht viel höher sein braucht, als die Anzahl der durchschnittlich benötigten Lizenzen, ohne dass die Fähigkeit verloren geht, Lastspitzen zu verarbeiten. Dies hat zum anderen den Nachteil, dass im Extremfall ("Worst Case"-Szenario) die Anzahl der allokierten Lizenzen sogar ein Vielfaches der Gesamtzahl der verfügbaren Lizenzen (freigebbare Lizenzen) übersteigen kann, je nach Anzahl der Ressource-Broker, abhängig vom Zeitintervall für die Synchronisierungs-Schritte bzw. Synchronisierungs-Zyklen und abhängig vom Nutzungsverhalten (also der Belegung von Ressourcen).

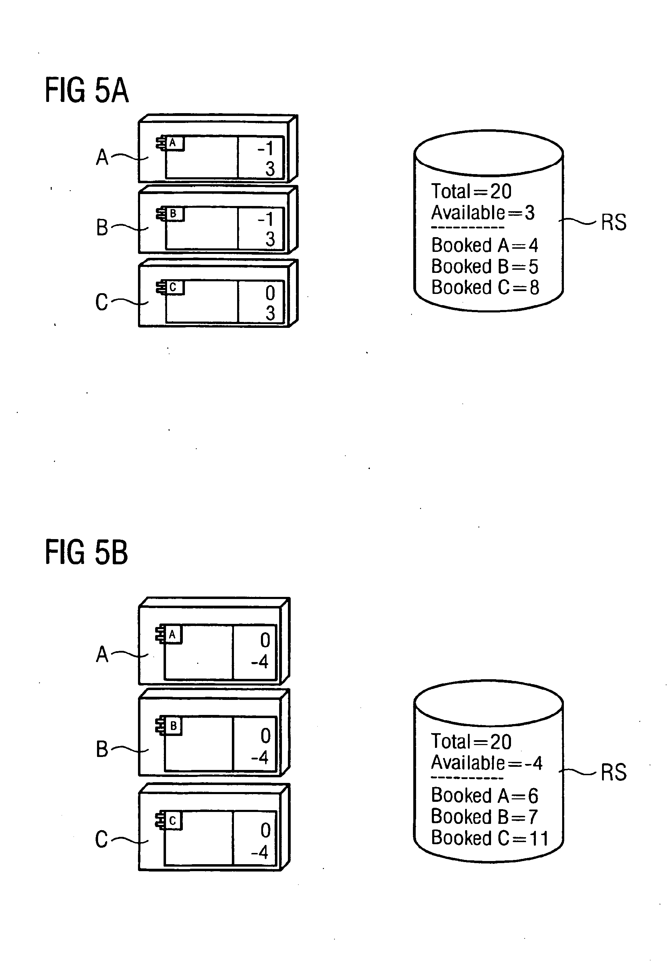

In der Figur 5A ist der Ausgangspunkt für ein solches "Worst Case"-Szenario dargestellt. Die Anzahl der freigebbaren Lizenzen ist bei einer Gesamtzahl ("Total = 20") auf drei freigebbare Lizenzen ("Available = 3") reduziert, weil in Summe siebzehn Lizenzen allokiert sind. Zusätzlich haben die Ressource-Broker der Applikations-Knoten A und B jeweils eine weitere Lizenz vergeben, so dass - theoretisch - nur noch eine Lizenz netzweit vergeben werden darf. Dennoch können vom Ressource-Broker des Applikations-Knotens A noch zwei Lizenzen, im Fall B weitere zwei Lizenzen und im Fall des Applikations-Knotens C drei Lizenzen gebucht werden. Geht man davon aus, dass solche Lizenz-Anforderungen vor den nächsten Synchronisierungs-Schritten tatsächlich stattfinden, ergibt sich spätestens nach den nächsten beiden Synchronisierungszyklen, also im Zustand einer vollständigen Synchronisierung, der in der Figur 5B dargestellte Zustand. Die Anzahl der freigebbaren Lizenzen ("Available = -4") ist sowohl im Ressource-Store RS als auch in den einzelnen Ressource-Brokern negativ ("-4"). Das Verfahren kann auf diesen Zustand durch verschiedene Strategien reagieren; in diesem Ausführungsbeispiel werden mehrere Strategien verwendet. Eine erste Reaktionsmöglichkeit ist die, dass die Synchronisierung der Ressource-Broker häufiger durchgeführt wird, damit etwaige zwischenzeitlich freigegebene Lizenzen möglichst schnell systemweit wieder genutzt werden können. Anstelle eines verkürzten Zeitintervalls für die Synchronisierungs-Schritte können die Ressource-Broker der Applikations-Knoten A, B, C aber auch so eingestellt werden, dass jegliche freigegebene Lizenz sofort zum Ressource-Store RS gemeldet wird. Weiter können die Ressource-Broker so eingestellt werden, dass Lizenzen nur dann vergeben werden, wenn in den jeweiligen Ressource-Brokern ein positiver Wert für die freigebbaren Lizenzen gespeichert ist. Alternativ können die Ressource-Broker aber auch so eingestellt werden, dass innerhalb vorbestimmter Grenzen und für eine vorgegebene "Toleranzzeit" auch "nicht-vorhandene" Lizenzen vergeben werden können. Im schlimmsten Fall, also beispielsweise kurz nach einem Systemstart, verknüpft mit einem langen Synchronisierungs-Intervall und einer maximalen Netzlast kann die Anzahl der "zu viel" vergebenen Lizenzen die Anzahl der Applikations-Knoten multipliziert mit der Gesamtzahl an Lizenzen minus 1 erreichen.

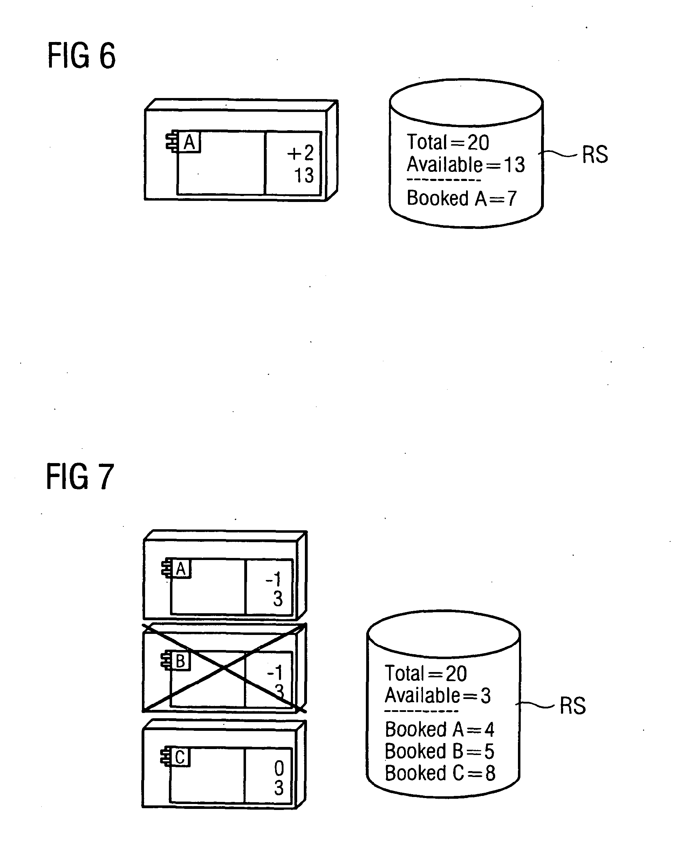

In der Figur 6 ist der nicht zur Erfindung gehörige Spezialfall dargestellt, in dem genau ein Ressource-Broker vorhanden ist. In einem solchen Fall wird der Synchronisierungs-Prozess nur benötigt, um zwischenzeitlich dem Ressource-Store RS neu hinzugefügte Lizenzen verfügbar zu machen bzw. diesem entnommene Lizenzen auch aus dem Ressource-Broker zu entfernen. Die zuletzt beschriebenen "Toleranz-Mechanismen", die auch bei langen Synchronisierungs-Zyklen dafür Sorge tragen, dass bei dem Ressource-Broker alle "gekauften" Lizenzen auch wirklich vergeben werden können, sind in diesem Szenario nicht notwendig.

Schließlich ist in der Figur 7 der Fall dargestellt, in dem ein Applikations-Knoten B und somit der dort installierte Ressource-Broker ausfällt. In der Figur 7 ist zu sehen, dass der Ressource-Broker des Applikations-Knotens B vor seinem Ausfall und nach dem letzten Synchronisierungs-Schritt eine weitere Ressource mit einer weiteren Lizenz versehen hat; dies zeigt die Zahl "-1" in der oberen Spalte des mittleren Blocks in der Figur. Zur Zeit des Ausfalls ist im Ressource-Store die Information vorhanden, dass im Applikations-Knoten B fünf Lizenzen allokiert sind, weil dies dem Stand der Dinge bei der letzten Synchronisierung entspricht.

Der Ausfall des Applikations-Knotens B wird durch eine Überwachungseinrichtung ("Watchdog") registriert. Die Registrierung des Ausfalls kann zu verschiedenen Reaktionen führen, beispielsweise kann die Überwachungseinrichtung versuchen, den Applikations-Knoten B neu zu starten. Sofern dieser Versuch erfolglos ist, wird davon ausgegangen, dass die von B verwalteten Ressourcen ebenfalls unerreichbar bzw. ausgefallen sind. Diese Einschätzung ist besonders in den Fällen realistisch, in denen eine Ressource in periodischen Zeitabständen eine in Nutzung befindliche Lizenz erneuern bzw. bestätigen muss. Im Lichte dieser Annahme wird die im Ressource-Store RS dem Applikations-Knoten B zugeordnete Anzahl gebuchter Lizenzen "Booked B = 5" gelöscht; die allokierten Lizenzen werden also im Gesamtsystem wieder freigegeben. Nach dem nächsten vollständigen Synchronisierungszyklus stehen diese Lizenzen den Ressource-Brokern der Applikations-Knoten A und C also wieder zur Verfügung. Die weiter oben beschrieben Möglichkeit, dass Ressourcen beim Ausfall eines Ressource-Brokers bzw. der zugeordneten Hardware ihre Lizenz-Anfragen an andere Ressource-Broker richten, führt dazu, dass ein automatisches "Load Balancing", also eine automatische neue Lastverteilung, erfolgt, wobei alle weiteren Lizenzanfragen an die Ressource-Broker der Applikations-Knoten A und C gerichtet werden. Dies geschieht so lange, bis der Ressource-Broker des Applikations-Knotens B wieder erreichbar ist; während der nächsten Synchronisierungszyklen und während der dann folgenden nächsten Ressourcen-Belegungen und Ressourcen-Freigaben und den damit verbundenen Allokierungs- und Freigabeaktionen für die Lizenzen wird sich die Lizenz-Verteilung im Gesamtsystem wieder in einen Normalzustand "einschwingen".

Durch die vorstehend beschriebenen Maßnahmen ist sichergestellt, dass auch bei einzelnen Ausfällen von Applikations-Knoten A, B, C und/oder des Ressource-Stores RS ein weitgehend störungsfreier Weiterbetrieb von Ressourcen gewährleistet ist. Darüber hinaus wird durch das Konzept der dezentralen Vergabe von Lizenzen ein häufiger Datenaustausch mit einer zentralen Instanz (hier: Ressource-Store RS) vermieden, was die Netzlast weiter minimiert.

## Patentansprüche

1. Computerimplementiertes Verfahren zur Verwaltung von Lizenzen in einem Netzwerk (NW) mit einer ersten Instanz (RS) sowie wenigstens einer zweiten Instanz (A, B, C), wobei
für die Nutzung einer Ressource (R1A, R1B, R2A, R2B) aus einer Mehrzahl Ressourcen (R1A, R1B, R2A, R2B) dieser Ressource (R1A, R1B, R2A, R2B) eine Lizenz von einer Mehrzahl Lizenzen zugeordnet wird,
die Lizenz nach Nutzung der Ressource (R1A, R1B, R2A, R2B) wieder freigegeben wird,
in der ersten Instanz (RS) die Anzahl freigebbarer Lizenzen registriert wird,
der zu nutzenden Ressource (R1A, R1B, R2A, R2B) durch die wenigstens eine zweite Instanz (A, B, C) eine in ihr registrierte freigebbare Lizenz zur Nutzung zugeordnet wird
und/oder eine von einer dieser zweiten Instanz (A, B, C) der Ressource (R1A, R1B, R2A, R2B) zugeordnete Lizenz bei Nicht-Nutzung in der zweiten Instanz (A, B, C) wieder als freigebbar registriert wird, und
in einem Synchronisierungs-Schritt wiederholt die Differenz aus der Anzahl der seit einem vorangegangenen Synchronisierungs-Schritt zur Nutzung vergebenen und den in dieser Zeit wieder freigegebenen Lizenzen von der zweiten Instanz (A, B, C) zu der ersten Instanz (RS) gemeldet wird, wobei gemäß dieser Differenz die Anzahl der in der ersten Instanz (RS) registrierten freigebbaren Lizenzen verringert wird, und umgekehrt die resultierende Anzahl der freigebbaren Lizenzen von der ersten Instanz (RS) zu der zweiten Instanz gemeldet und dort als Anzahl der freigebbaren Lizenzen registriert wird, und wobei mehrere zweite Instanzen (A, B, C) vorgesehen werden und der Synchronisierungs-Schritt wiederholt nacheinander mit jeder der zweiten Instanzen (A, B, C) durchgeführt wird,
**dadurch gekennzeichnet, dass**
nach jeweiligem Abschluss jedes Synchronisierungs-Schrittes jede der zweiten Instanzen (A, B, C) alle der in ihnen registrierten aktuell freigebbaren Lizenzen auf Anforderung auch in den Fällen freigibt, in denen die Verbindung zu der ersten Instanz (RS) nicht oder nur eingeschränkt möglich ist, und die Synchronisierungs-Schritte in einem vorgegebenen Zeitraster wiederholt ausgeführt werden.

2. Verfahren nach Patentanspruch 1,
**dadurch gekennzeichnet,**
**dass** durch die zu nutzende Ressource (R1A, R1B, R2A, R2B) vor ihrer Nutzung oder zum Beginn ihrer Nutzung die Zuteilung einer Lizenz durch eine zweite Instanz (A, B, C), der diese Ressource (R1A, R1B, R2A, R2B) zugeordnet ist, veranlasst wird, wobei durch die zweite Instanz (A, B, C) in den Fällen, in denen zumindest eine freigebbare Lizenz in der zweiten Instanz registriert ist, der Ressource (R1A, R1B, R2A, R2B) diese Lizenz zugeteilt wird und diese Lizenz für weitere Ressourcen (R1A, R1B, R2A, R2B) so lange gesperrt wird, bis diese Lizenz durch die sie nutzende Ressource (R1A, R1B, R2A, R2B) wieder freigegeben wird.

3. Verfahren nach einem der vorhergehenden Patentansprüche,
**dadurch gekennzeichnet,**
**dass** verschiedene Typen von Ressourcen (R1A, R1B, R2A, R2B) definiert werden, wobei für die verschiedenen Ressourcen-Typen verschiedene Lizenz-Typen definiert werden und die Lizenzen verschiedenen Typs durch die erste Instanz (RS) und durch die zweiten Instanzen (A, B, C) jeweils getrennt voneinander verwaltet werden.

4. Verfahren nach Patentanspruch 1,
**dadurch gekennzeichnet,**
**dass** in den Fällen, in denen die Anzahl registrierter freigebbarer Lizenzen in der ersten Instanz (RS) und/oder in zumindest einer der zweiten Instanzen (A, B, C) einen vordefinierten Schwellwert unterschreitet, der Synchronisierungs-Schritt häufiger als in dem Zeitraster vorgegeben durchgeführt wird.

5. Verfahren nach einem der vorhergehenden Patentansprüche,
**dadurch gekennzeichnet,**
**dass** jede Ressource (R1A, R1B, R2A, R2B) genau einer der zweiten Instanzen (A, B, C) zugeordnet wird.

6. Verfahren nach Patentanspruch 5,
**dadurch gekennzeichnet,**
**dass** in den Fällen, in denen eine der zweiten Instanzen (A, B, C) ausfällt und/oder nicht erreichbar ist, die dieser zweiten Instanz (A, B, C) zugeordneten Ressourcen (R1A, R1B, R2A, R2B) einer weiteren der zweiten Instanzen (A, B, C) zugeordnet werden.

7. Verfahren nach einem der vorhergehenden Patentansprüche,
**dadurch gekennzeichnet,**
**dass** die erste Instanz (RS) und/oder die zweiten Instanzen (A, B, C) derart voreingestellt werden, dass für einen vordefinierten Zeitraum die Anzahl der in Nutzung befindlichen Lizenzen die Anzahl der registrierten freigebbaren Lizenzen übersteigen kann.

8. Verfahren nach Patentanspruch 7,
**dadurch gekennzeichnet,**
**dass** der vordefinierte Zeitraum der Zeitraum bis zum Abschluss des nächsten Synchronisierungs-Schrittes ist.

9. Verfahren nach Patentanspruch 7 oder 8,
**dadurch gekennzeichnet,**
**dass** die Anzahl derjenigen in Nutzung befindlichen Lizenzen, die über die Anzahl der freigebbaren Lizenzen hinausgeht, vorgegeben wird.

10. Anordnung zur Durchführung eines computerimplementierten Verfahrens nach einem der vorhergehenden Ansprüche, aufweisend
eine erste Instanz (RS) sowie
mehrere zweite Instanzen (A, B, C).

## Claims

1. Computer-implemented method for the administration of licences in a network (NW) with a first instance (RS) and at least one second instance (A, B, C), wherein for the use of one resource (R1A, R1B, R2A, R2B) from a plurality of resources (R1A, R1B, R2A, R2B) this resource (R1A, R1B, R2A, R2B) is assigned one licence from a plurality of licences, the licence is approved again after use of the resource (R1A, R1B, R2A, R2B), the number of approvable licences is registered in the first instance (RS), the resource (R1A, R1B, R2A, R2B) to be used is assigned by the at least one second instance (A, B, C) an approvable licence registered in it for use and / or a licence assigned to the resource (R1A, R1B, R2A, R2B) by one of these second instances (A, B, C) is registered in the second instance (A, B, C) as approvable again if it is not used, and in a synchronisation step the difference from the number of the licences awarded for use since a preceding synchronisation step and the licences approved again in this time by the second instance (A, B, C) is reported to the first instance (RS), wherein according to this difference the number of the approvable licences registered in the first instance (RS) is reduced, and vice versa the resulting number of approvable licences is reported by the first instance (RS) to the second instance and registered there as the number of approvable licences, and wherein several second instances (A, B, C) are provided and the synchronisation step is carried out repeatedly in turn with each of the second instances (A, B, C), **characterised in that** after the end of each synchronisation step each of the second instances (A, B, C) approves all the currently approvable licences registered in them upon request even in cases in which the connection to the first instance (RS) is not possible or is only possible to a limited extent, and the synchronisation steps are carried out repeatedly in a specified time reference.

2. Method according to claim 1 **characterised in that**, by the resource (R1A, R1B, R2A, R2B) to be used, before its use or at the start of its use, the issue of a licence is prompted by a second instance (A, B, C) to which this resource (R1A, R1B, R2A, R2B) is assigned, wherein in cases in which at least one approvable licence is registered in the second instance by the second instance (A, B, C), this licence is assigned to the resource (R1A, R1B, R2A, R2B) and this licence is blocked for further resources (R1A, R1B, R2A, R2B) until this licence is approved again by the resource (R1A, R1B, R2A, R2B) using it.

3. Method according to any one of the preceding claims **characterised in that** different types of resources (R1A, R1B, R2A, R2B) are defined, wherein for the different resource types difference licence types are defined and the licences of different types are each administered separately from each other by the first instance (RS) and by the second instances (A, B, C).

4. Method according to claim 1 **characterised in that** in cases in which the number of registered approvable licences in the first instance (RS) and / or in at least one of the second instances (A, B, C) is below a pre-defined threshold, the synchronisation step is carried out more frequently than specified in the time reference.

5. Method according to any one of the preceding claims **characterised in that** each resource (R1A, R1B, R2A, R2B) is assigned precisely to one of the second instances (A, B, C).

6. Method according to claim 5 **characterised in that** in cases in which one of the second instances (A, B, C) is not functioning and / or is not accessible, the resources (R1A, R1B, R2A, R2B) assigned to this second instance (A, B, C) are assigned to another of the second instances (A, B, C).

7. Method according to any one of the preceding claims **characterised in that** the first instance (RS) and / or the second instances (A, B, C) are pre-set such that for a pre-defined period the number of licences in use can exceed the number of registered approvable licences.

8. Method according to claim 7 **characterised in that** the pre-defined period is the period up to the end of the next synchronisation step.

9. Method according to claim 7 or 8 **characterised in that** the number of the licences in use which exceeds the number of approvable licences is specified.

10. Arrangement for carrying out a computer-implemented method according to one of the foregoing claims, having a first instance (RS) and a plurality of second instances (A, B, C).

## Revendications

1. Procédé informatisé de gestion de licences dans un réseau (NW) avec une première instance (RS) ainsi qu'au moins avec une deuxième instance (A, B, C), sachant que pour l'utilisation d'une ressource (R1A, R1B, R2A, R2B) issue d'une pluralité de ressources (R1A, R1B, R2A, R2B), une licence d'une pluralité de licences est associée à ladite ressource (R1A, R1B, R2A, R2B),
sachant que la licence est à nouveau débloquée après l'utilisation de la ressource (R1A, R1B, R2A, R2B),
sachant que la quantité de licences pouvant être débloquées est enregistrée dans la première instance (RS), sachant qu'au moins une deuxième instance (A, B, C) permet aux fins d'une utilisation d'associer une licence enregistrée dans cette dernière, pouvant être débloquée à la ressource à utiliser (R1A, R1B, R2A, R2B) et/ou qu'une licence associée à la ressource (R1A, R1B, R2A, R2B) par l'une desdites deuxièmes instances (A, B, C) est à nouveau enregistrée comme pouvant être débloquée en cas de non-utilisation dans la deuxième instance (A, B, C), et
sachant que lors d'une étape de synchronisation, la différence entre le nombre des licences attribuées aux fins de l'utilisation depuis une étape de synchronisation précédente et celui des licences à nouveau débloquées pendant ce laps de temps est notifiée de manière répétée par la deuxième instance (A, B, C) à la première instance (RS), sachant que selon cette différence le nombre des licences pouvant être débloquées enregistrées dans la première instance (RS) est réduit et qu'inversement, le nombre résultant des licences pouvant être débloquées est notifié par la première instance (RS) à la deuxième instance et est y est enregistré comme le nombre des licences pouvant être débloquées,
et sachant que plusieurs deuxièmes instances (A, B, C) sont prévues et que l'étape de synchronisation est effectuée de manière répétée et de manière consécutive avec chacune des deuxièmes instances (A, B, C),
**caractérisé en ce**
**qu'**à l'issue respective de chaque étape de synchronisation, chacune des deuxièmes instances (A, B, C) débloque sur demande également toutes les licences pouvant être débloquées à ce moment et enregistrées dans lesdites deuxièmes instances dans tous les cas où la liaison avec la première instance (RS) n'est pas possible ou seulement de manière limitée, et en ce que les étapes de synchronisation sont effectuées de manière répétée sur un créneau prédéfini.

2. Procédé selon la revendication 1,
**caractérisé en ce**
**que** la ressource à utiliser (R1A, R1B, R2A, R2B) permet de donner lieu avant son utilisation ou au début de cette dernière à l'affectation d'une licence par une deuxième instance (A, B, C), à laquelle est associée ladite ressource (R1A, R1B, R2A, r2B), sachant que la deuxième instance (A, B, C) permet d'affecter ladite licence à la ressource (R1A, R1B, R2A, R2B) dans les cas où au moins une licence pouvant être débloquée est enregistrée dans la deuxième instance et sachant que ladite licence n'est pas accessible pour d'autres ressources (R1A, R1B, R2A, R2B) tant qu'elle n'a pas été à nouveau débloquée par la ressource (R1A, R1B, R2A, R2B) l'utilisant.

3. Procédé selon l'une quelconque des revendications précédentes,
**caractérisé en ce**
**que** divers types de ressources (R1A, R1B, R2A, R2B) sont définis, sachant que divers types de licences sont définis pour les divers types de ressources et que les licences de type différent sont gérées respectivement séparément les unes des autres par la première instance (RS) et par les deuxièmes instances (A, B, C).

4. Procédé selon la revendication 1,
**caractérisé en ce**
**que** dans les cas où le nombre de licences enregistrées pouvant être débloquées est inférieur à une valeur seuil prédéfinie dans la première instance (RS) et/ou dans au moins l'une des deuxièmes instances (A, B, C), l'étape de synchronisation est effectuée à une plus grande fréquence que cela n'est prédéfini dans le créneau.

5. Procédé selon l'une quelconque des revendications précédentes,
**caractérisé en ce**
**que** chaque ressource (R1A, R1B, R2A, R2B) est associée précisément à l'une des deuxièmes instances (A, B, C).

6. Procédé selon la revendication 5,
**caractérisé en ce**
**que** dans les cas où l'une des deuxièmes instances (A, B, C) tombe en panne et/ou n'est pas disponible, les ressources (R1A, R1B, R2A, R2B) associées à ladite deuxième instance (A, B, C) sont associées à une autre instance parmi les deuxièmes instances (A, B, C).

7. Procédé selon l'une quelconque des revendications précédentes,
**caractérisé en ce**
**que** la première instance (RS) et/ou les deuxièmes instances (A, B, C) sont préalablement réglées de telle manière que pour un laps de temps prédéfini, le nombre des licences disponibles à l'utilisation peut dépasser le nombre des licences enregistrées pouvant être débloquées.

8. Procédé selon la revendication 7,
**caractérisé en ce**
**que** l'intervalle de temps prédéfini est l'intervalle de temps courant jusqu'à la fin de l'étape de synchronisation qui suit.

9. Procédé selon la revendication 7 ou 8,
**caractérisé en ce**
**que** le nombre desdites licences disponibles à l'utilisation dépassant le nombre des licences pouvant être débloquées est prédéfini.

10. Ensemble servant à la mise en oeuvre d'un procédé informatisé selon l'une quelconque des revendications précédentes, présentant
une première instance (RS) ainsi
que plusieurs deuxièmes instances (A, B, C).
